# EUROPEAN PATENT SPECIFICATION

(11) **EP 2 353 487 B1**
(45) Date of publication and mention of the grant of the patent: **25.05.2016**
(21) Application number: 11151604.3
(22) Date of filing: 21.01.2011
(51) Int. Cl.: A47L 15/48

(54) **Dishwasher**
Geschirrspüler
Lave-vaisselle

(30) Priority: 01.02.2010 KR 20100009257
(43) Date of publication of application: 10.08.2011
(73) Proprietor: Samsung Electronics Co., Ltd., Suwon-si, Gyeonggi-do, 443-742 (KR)
(72) Inventor: Hong, Seung Gee, Gyeonggi-do (KR)
(74) Representative: Grünecker Patent- und Rechtsanwälte PartG mbB

(56) References cited:
- EP-A1- 1 674 030
- EP-A1- 2 072 109
- DE-A1- 2 252 668
- DE-A1-102007 033 494
- FR-A1- 2 924 592
- JP-A- 2005 211 588

## Description

### BACKGROUND

### 1. Field

Embodiments relate to a dishwasher having an enhanced drying function.

### 2. Description of the Related Art

Generally, a dishwasher is an apparatus to enable sanitary and efficient washing of dishes, and functions to wash dirty dishes and dry the washed dishes.

Such a dishwasher adopts a drying method in which an interior temperature of the dishwasher is raised during washing and rinsing via a rise in water temperature to facilitate evaporation of water present on dishes and to remove water vapor evaporated from the dishes via condensation in a cooling duct or using a dehumidifying material.

Use of the dehumidifying material necessitates drying (regeneration) of the dehumidifying material to allow the dehumidifying material to absorb water vapor during a following cycle. This has been implemented as a heater heats the dehumidifying material during a washing process before a drying process.

Specifically, moisture contained in the dehumidifying material is evaporated as the heater heats the dehumidifying material during a washing process, and the resulting water vapor is fed to the interior of the dishwasher. After completion of the washing process, the previously regenerated dehumidifying material acts to again absorb moisture during a drying process, realizing drying of dishes.

However, if the dehumidifying material absorbs fat or dirt, washing of the dehumidifying material may be impossible and deterioration in drying performance may be inevitable. The contaminated dehumidifying material may further cause sanitary problems. Furthermore, providing the heater to dry the dehumidifying material may entail increased manufacturing costs and complicated configuration.

FR 2924592 discloses a household appliance with a case and some wash tub provided in the case. A circulation duct communicates with the wash tub to allow air to be circulated through the wash tub and circulation duct. A particular dehumidifying material is arranged within the duct to remove moisture content in the air.

The corresponding material is arranged in a corresponding housing of the duct with a lower part and a cover part. Lower part and cover part are fixed to each other for example by screws.

### SUMMARY

It is an object of the present invention to provide a dishwasher according to which it is easily possible to remove/replace the dehumidifying material and to inform the user correspondingly.

Additional aspects will be set forth in part in the description which follows and, in part, will be apparent from the description, or may be learned by practice of the invention.

This object is solved by the features of the independent claims.

Advantageous embodiments are disclosed by the subclaims.

The circulation duct may include a dehumidifying material receptacle to receive the dehumidifying material therein, and a dehumidifying material cover to cover the dehumidifying material receptacle.

The circulation duct may include an inlet through which interior air of the wash tub is introduced, an outlet through which the air is discharged into the wash tub, and a flow-path portion connecting the outlet and inlet to each other, through which the air moves, and the dehumidifying material receptacle and dehumidifying material cover may be arranged in the flow-path portion.

The flow-path portion may include a water intercepting portion inclined upward from around the inlet, to prevent water of the wash tub from directly entering the interior of the circulation duct.

The circulation duct may include a circulation fan to circulate the air, and the circulation fan may be arranged adjacent to at least one of the inlet and outlet.

The dehumidifying material may be made of at least one of zeolite, porous fiber, active carbon and super absorbent polymer.

The dishwasher may further include a door to open or close the wash tub, and the circulation duct may be located within the door.

The circulation duct may be located between the wash tub and the case.

The dehumidifying material may be detached or attached through a space between the wash tub and the case.

The circulation duct may be located within the door.

The circulation duct may be located within the door.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a side sectional view illustrating main components of a dishwasher according to an embodiment;
FIG. 2A is a perspective view illustrating a circulation duct mounted in a door;
FIG. 2B is an exploded perspective view illustrating a dehumidifying material separated from the door;
FIG. 3 is a block diagram illustrating a drying principle of the dishwasher;
FIG. 4A is a rear perspective view illustrating a dishwasher according to another embodiment; and
FIG. 4B is a view illustrating exchange of the dehumidifying material.

### DETAILED DESCRIPTION

Reference will now be made in detail to the embodiments, examples of which are illustrated in the accompanying drawings, wherein like reference numerals refer to like elements throughout.

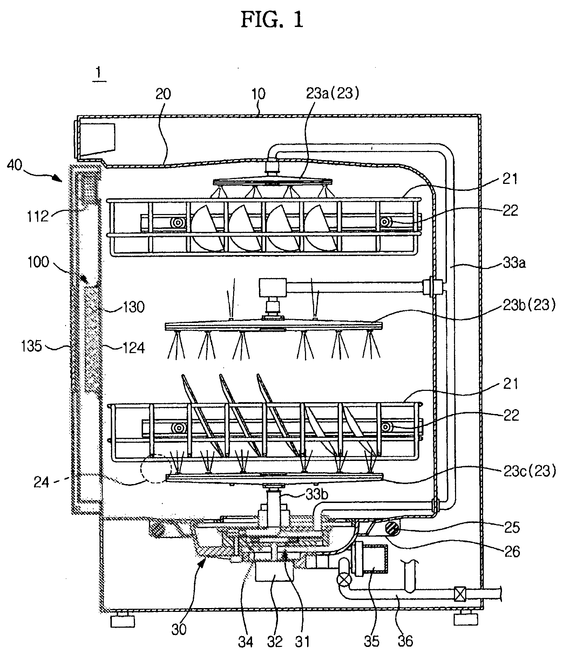

FIG. 1 is a side sectional view illustrating main components of a dishwasher according to an embodiment.

As illustrated in FIG. 1, the dishwasher 1 includes a case 10, a wash tub 20 placed in the case 10 to define a washing space, a sump 30 placed beneath the wash tub 20 to store wash water therein, a door 40 to open or close a front side of the wash tub 20, a circulation duct 100 to dry the interior of the wash tub 20, and a dehumidifying material 130 detachably attached to the circulation duct 100.

The wash tub 20 may include at least one dish basket 21 in which dishes are received, at least one rack 22 to support the at least one dish basket 21 in a sliding movable manner, and at least one injection nozzle 23 to inject wash water. Here, the at least one injection nozzle 23 may include a top nozzle 23a, upper nozzle 23b and lower nozzle 23c.

The wash tub 20 may be provided with a water feeder 24 to feed wash water. The water feeder 24 may be provided at a sidewall wall of the wash tub 20 such that wash water is fed into the wash tub 20 through the water feeder 24.

In addition, the wash tub 20 may be provided with a heater 25 to heat wash water, and a heater installation recess 26. The heater installation recess 26 may be formed in the bottom of the wash tub 20, and the heater 25 may be inserted into the heater installation recess 26.

The sump 30 may be located at the bottom center of the wash tub 20 to collect wash water and pump the collected wash water.

The sump 30 may include a washing pump 31 to pump wash water at a high pressure, and a pump motor 32 to drive the washing pump 31. The washing pump 31 may pump wash water to the top nozzle 23a and upper nozzle 23b through a first feed pipe 33a and to the lower nozzle 23c through a second feed pipe 33b.

The sump 30 may include a turbidity sensor 34 to detect the pollution level of wash water. A controller (not shown) of the dishwasher 1 may control the implementation number of a washing or rinsing operation based on the pollution level of wash water detected by the turbidity sensor 34. For example, the controller may increase the number of a washing or rinsing operation if the pollution level is high, and may decrease the number of a washing or rinsing operation if the pollution level is low.

A drain pump 35 and drain pipe 36 may be installed at one side of the sump 30 to discharge the polluted wash water out of the dishwasher 1.

The door 40 may be pivotally rotatably coupled to the case 10 to open or close the front side of the wash tub 20. A variety of electric elements and the circulation duct 100 may be mounted in an interior space of the door 40.

Hereinafter, the circulation duct 100 and dehumidifying material 130 will be described in detail.

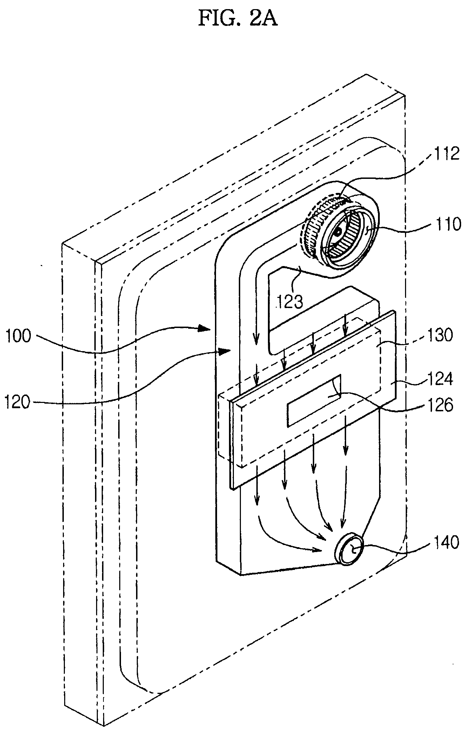

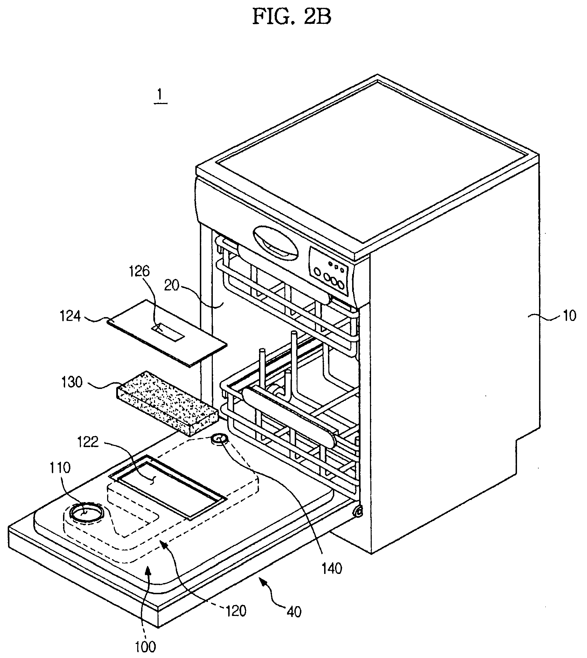

FIG. 2A is a perspective view illustrating the circulation duct within the door, and FIG. 2B is an exploded perspective view illustrating the dehumidifying material separated from the door.

As illustrated in FIGS. 2A and 2B, the door 40 internally accommodates the circulation duct 100 such that the circulation duct 100 communicates with the wash tub 20 for air circulation.

The circulation duct 100 includes an inlet 110 through which interior air of the wash tub 20 is introduced, an outlet 140 through which the interior air of the wash tub 20 having circulated in the circulation duct 100 is discharged, and a flow-path portion 120 connected between the inlet 110 and the outlet 140 to enable air circulation.

The inlet 110 is located at a relatively upper position of the door 40, and a circulation fan 112 is provided inside the inlet 110 to draw and circulate the interior air of the wash tub 20. The circulation fan 112 is rotated by a motor (not shown) to forcibly draw the interior air of the wash tub 20 into the circulation duct 100.

The flow-path portion 120 connected to the inlet 110 extends from the top to the bottom of the door 40 to allow the air to move along a flow-path defined therein. The flow-path portion 120 includes a water intercepting portion 123 inclined upward from around the inlet 110. The water intercepting portion 123 having an inclination serves to prevent water from entering the interior of the circulation duct 100 even if water of the wash tub 20 is introduced into the inlet 110. If water enters the interior of the circulation duct 100, the dehumidifying material 130 may absorb the water, thus having considerable deterioration in drying performance. Accordingly, the water intercepting portion 123 serves to prevent deterioration in performance of the dehumidifying material 130.

The circulation duct 100 includes a dehumidifying material receptacle 122 into which the dehumidifying material 130 is centrally fitted, and a dehumidifying material cover 124 to cover the dehumidifying material receptacle 122. Once the dehumidifying material 130 to remove moisture is fitted into the dehumidifying material receptacle 122, the dehumidifying material 130 is covered with the dehumidifying material cover 124.

The dehumidifying material 130 has excellent hygroscopicity to absorb moisture contained in the air moving in the circulation duct 100. The dehumidifying material 130 may be selected from among zeolite, active carbon, super absorbent polymer, porous fiber, and the like. Zeolite is hydrated aluminum silicate mineral with alkali and alkali-earth metals, and is colorless transparent or white semi-transparent. Active carbon is an adsorbent having strong adsorption and mainly consisting of carbon materials, and is used to adsorb gas or moisture. Super absorbent polymer is a resin to absorb water as much as several tens to several hundreds times the weight thereof. Since active carbon itself sucks up water, it absorbs a greater amount of water than absorbent cotton or cotton fabric and does not discharge water under the influence of a moderate pressure.

The dehumidifying material 130 has a shape suitable to be fitted into the dehumidifying material receptacle 122. In the embodiment of the present invention, the dehumidifying material 130 has a rectangular shape. The dehumidifying material 130 and dehumidifying material receptacle 122 may have various shapes including, e.g., circular and square shapes, and are not limited to the rectangular shape. In addition, the dehumidifying material 130 may have various sizes, and a plurality of dehumidifying materials 130 may be fitted into the single dehumidifying material receptacle 122.

The dehumidifying material 130 takes the form of a cartridge to allow a user to easily exchange the dehumidifying material 130. Thus, the user may easily attach or detach the dehumidifying material 130 to or from the dehumidifying material receptacle 122 of the door 40.

The dehumidifying material cover 124 covers the dehumidifying material 130 to isolate the dehumidifying material 130 from the interior of the wash tub 20. The dehumidifying material cover 124 constitutes a part of an inner wall of the door 40, and the user may easily attach or detach the dehumidifying material cover 124 to or from the door 40 by inserting his/her finger(s) into a cover recess 126.

A moisture content display 135 is provided at an outer surface of the door 40 to inform the user of a moisture content degree of the dehumidifying material 130 (see FIG. 1). Thus, the user may exchange the dehumidifying material 130 when the dehumidifying material 130 has a high moisture content degree.

Hereinafter, a drying operation of the dishwasher 1 will be described.

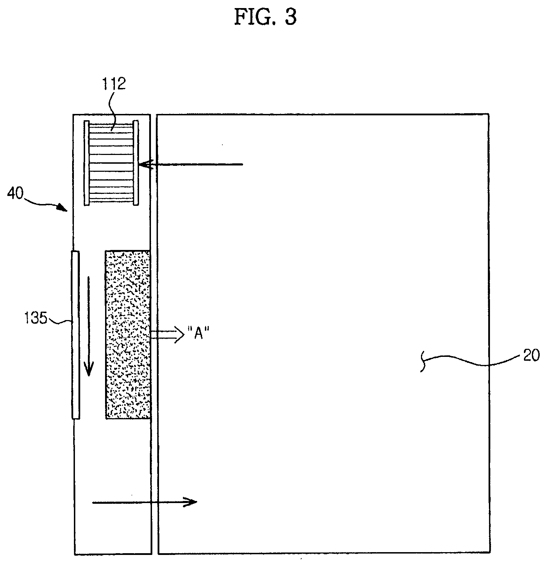

FIG. 3 is a block diagram illustrating a drying principle of the dishwasher.

As illustrated in FIG. 3, if the dishwasher 1 completes a washing operation, the interior air of the wash tub 20 and dishes received in the wash tub 20 contain a great quantity of moisture. Then, if a drying operation begins, the circulation fan 112 is operated, causing the interior air of the wash tub 20 to be introduced into the inlet 110 of the circulation duct 100 and then, after moving through the flow-path portion 120, to be again introduced into the wash tub 20 through the outlet 140. That is, the air continuously circulates through the wash tub 20 and circulation duct 100. During the air circulation, the dehumidifying material 130 placed in the flow-path portion 120 absorbs moisture contained in the air.

The moisture content degree of the dehumidifying material 130 is represented on the moisture content display 135. If the moisture content display 135 informs that the moisture content degree of the dehumidifying material 130 reaches a level that necessitates exchange of the dehumidifying material 130, the user may exchange the dehumidifying material 130 with another dehumidifying material, i.e. previously dried dehumidifying material.

To exchange the dehumidifying material 130, the user first opens the door 40 and pulls the dehumidifying material cover 124 from the door 40 in a direction designated by the arrow "A" by inserting his/her finger(s) into the cover recess 126 of the dehumidifying material cover 124. After taking out the saturated dehumidifying material 130 and putting the previously dried dehumidifying material 130 into the dehumidifying material receptacle 122, the user closes the dehumidifying material cover 124, completing exchange of the dehumidifying material 130.

Drying of the saturated dehumidifying material 130 may be accomplished using various methods. For example, the saturated dehumidifying material may be subjected to natural drying using sunlight or wind, or may be dried using a drying appliance, such as a microwave oven. In addition, if the dehumidifying material 130 is contaminated by dirt, the dehumidifying material 130 may be washed using detergent, etc. In this case, the dehumidifying material 130 separated from the door 40 may assure very easy washing, differently from a conventional dehumidifying material permanently attached inside the dishwasher 1.

As described above, when the dehumidifying material 130 is detachably provided within the dishwasher 1, separation and washing of the contaminated dehumidifying material 130 may be possible, enhancing the overall sanitation of the dishwasher 1. Further, the clean dehumidifying material 130 indirectly has the effects of enhancing the drying performance of the dishwasher 1 and reducing unnecessary energy consumption. Furthermore, since a heater to dry the dehumidifying material 130 is unnecessary, the dishwasher 1 may have reduced manufacturing costs and simplified configuration.

Hereinafter, a dishwasher 2 according to another embodiment will be described. A description related to the same configuration as the dishwasher 1 according to the above described embodiment will be omitted.

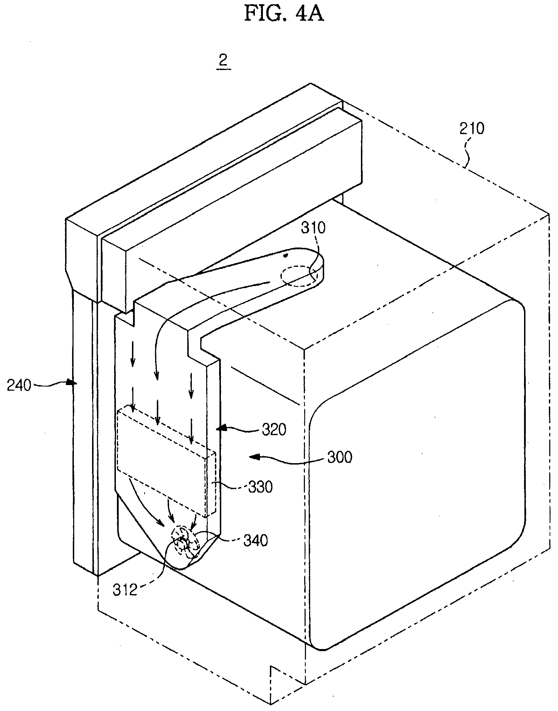

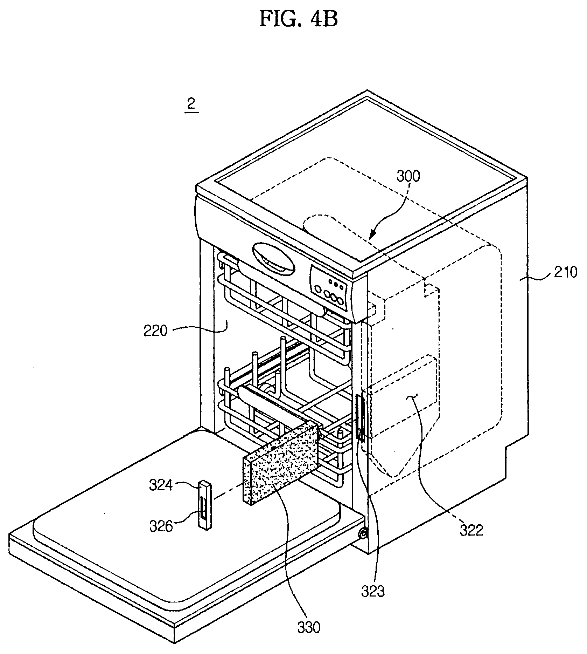

FIG. 4A is a rear perspective view illustrating the dishwasher according to another embodiment, and FIG. 4B is a view illustrating exchange of the dehumidifying material.

As illustrated in FIGS. 4A and 4B, in the dishwasher 2 according to the present embodiment, a circulation duct 300 is attached to a side surface of a wash tub 220 in a space between the wash tub 220 and a case 210, rather than being mounted within a door 240. In the same manner as the circulation duct 100 of the above described embodiment, the circulation duct 300 includes an inlet 310, flow-path portion 320 and outlet 340. The inlet 310 is located on the top of the wash tub 220, the outlet 340 is located on the side surface of the wash tub 220, and a circulation fan 312 for air circulation is located adjacent to the outlet 340.

A dehumidifying material receptacle 322 is provided at the center of the side surface of the wash tub 220, and a dehumidifying material 330 is detachably attached through the space between the wash tub 220 and the case 210. Specifically, the dehumidifying material 330 may be fitted into or separated from the dehumidifying material receptacle 322 through a dehumidifying material hole 323 perforated in the case 210 to communicate with the space between the wash tub 220 and the case 210. After exchange of the dehumidifying material 330 is completed, the dehumidifying material hole 323 is covered with a dehumidifying material cover 324. The dehumidifying material cover 324 has a cover recess 326 to assure easy handling of the dehumidifying material cover 324.

Other configurations of the dishwasher 2 are identical to those of the dishwasher 1 according to the above described embodiment.

As is apparent from the above description, a dishwasher according to an embodiment of the present invention adopts a detachable dehumidifying material, to separate the dehumidifying material for washing and drying thereof.

Thoroughly washing the dehumidifying material may enhance the overall sanitation of the dishwasher.

Further, washing the dehumidifying material may effectively reduce energy consumption as compared to heating the dehumidifying material.

The washed dehumidifying material is perfectly free from dirt residue, achieving enhancement in drying performance.

Furthermore, eliminating a need for a heater used to dry the dehumidifying material may reduce manufacturing costs of the dishwasher and also, may simplify the entire configuration of the dishwasher.

Although a few embodiments have been shown and described, it would be appreciated by those skilled in the art that changes may be made in these embodiments without departing from the principles of the invention, the scope of which is defined in the claims.

## Claims

1. A dishwasher (1, 2) comprising:
a case (10, 210);
a wash tub (20, 220) provided in the case, in which dishes are received;
a circulation duct (100, 300) communicating with the wash tub (10, 220) to allow air to be circulated through the wash tub and circulation duct; and
a dehumidifying material (130, 330) to remove moisture contained in the air,
wherein the dehumidifying material is detachably provided in the circulation duct, **characterized by** the dishwasher (1, 2) further comprising a moisture content display (135) to inform a user of a moisture content degree of the dehumidifying material (130, 330).

2. The dishwasher according to claim 1, wherein the circulation duct (100, 300) includes a dehumidifying material receptacle (122, 322) to receive the dehumidifying material (130, 330) therein and a dehumidifying material cover (124, 324) to cover the dehumidifying material receptacle.

3. The dishwasher according to claim 2, wherein:
the circulation duct (100, 300) includes an inlet (110, 310) through which interior air of the wash tub is introduced, an outlet (140 ,340) through which the air is discharged into the wash tub, and a flow-path portion (120, 320) connecting the outlet and inlet to each other, through which the air moves; and
the dehumidifying material receptacle (122, 322) and dehumidifying material cover (124, 324) are arranged in the flow-path portion.

4. The dishwasher according to claim 3, wherein the flow-path portion (120) includes a water intercepting portion (123) inclined upward from around the inlet (110), to prevent water of the wash tub from directly entering the interior of the circulation duct.

5. The dishwasher according to claim 1, wherein:
the circulation duct (100, 300) includes a circulation fan (112, 312) to circulate the air; and
the circulation fan is arranged adjacent to at least one of the inlet (110, 310) and outlet (140, 340).

6. The dishwasher according to claim 1, wherein the dehumidifying material (130, 330) is made of at least one of zeolite, porous fiber, active carbon and super absorbent polymer.

## Patentansprüche

1. Geschirrspüler (1, 2), umfassend:
ein Gehäuse (10, 210);
einen Waschbottich (20, 220), der in dem Gehäuse angeordnet ist und Geschirr aufnimmt;
einen Zirkulationskanal (100, 300), der mit dem Waschbottich (10, 220) in Verbindung steht, so dass Luft durch den Waschbottich und den Zirkulationskanal zirkuliert werden kann; und
ein Entfeuchtungsmaterial (130, 330) zum Entfernen von Feuchtigkeit aus der Luft,
wobei das Entfeuchtungsmaterial lösbar in dem Zirkulationskanal angeordnet ist, **dadurch gekennzeichnet, dass** der Geschirrspüler (1, 2) des Weiteren eine Feuchtigkeitsgehaltanzeige (135) umfasst, um einen Benutzer über einen Grad des Feuchtigkeitsgehalts in dem Entfeuchtungsmaterial (130, 330) zu informieren.

2. Geschirrspüler nach Anspruch 1, wobei der Zirkulationskanal (100, 300) eine Entfeuchtungsmaterial-Aufnahme (122, 322) aufweist, um das Entfeuchtungsmaterial (130, 330) aufzunehmen und einen Entfeuchtungsmaterial-Deckel (124, 324), um die Entfeuchtungsmaterial-Aufnahme abzudecken.

3. Geschirrspüler nach Anspruch 2, wobei:
der Zirkulationskanal (100, 300) einen Einlass (110, 310) aufweist, durch den Innenluft des Waschbottichs eingeleitet wird, und einen Auslass (140, 340), durch den die Luft in den Waschbottich ausgestoßen wird, und einen Strömungswegabschnitt (120, 320), der den Auslass und den Einlass miteinander verbindet, durch den sich die Luft bewegt; und
die Entfeuchtungsmaterial-Aufnahme (122, 322) und der Entfeuchtungsmaterial-Deckel (124, 324) in dem Strömungswegabschnitt angeordnet sind.

4. Geschirrspüler nach Anspruch 3, wobei der Strömungswegabschnitt (120) einen Wasserauffangsabschnitt (123) aufweist, der von um den Einlass (110) nach oben geneigt ist, um zu verhindern, dass Wasser aus dem Waschbottich direkt in das Innere des Zirkulationskanals gelangt.

5. Geschirrspüler nach Anspruch 1, wobei:
der Zirkulationskanal (100, 300) einen Zirkulationslüfter (112, 312) aufweist, um die Luft zu zirkulieren; und
der Zirkulationslüfter neben mindestens einem aus dem Einlass (110, 310) und dem Auslass (140, 340) angeordnet ist.

6. Geschirrspüler nach Anspruch 1, wobei das Entfeuchtungsmaterial (130, 330) aus mindestens einem aus Zeolith, poröser Faser, Aktivkohle und einem superabsorbierenden Polymer besteht.

## Revendications

1. Lave-vaisselle (1, 2) comprenant :
une enveloppe (10, 210),
une cuve de lavage (20, 220) ménagée dans l'enveloppe, dans laquelle sont reçus des plats,
une conduite de circulation (100, 300) communiquant avec la cuve de lavage (20, 220) afin de permettre la circulation d'air au travers de la cuve de lavage et de la conduite de circulation, et
un matériau de déshumidification (130, 230) permettant d'éliminer l'humidité contenue dans l'air,
dans lequel le matériau de déshumidification est prévu pour être amovible dans la conduite de circulation,
**caractérisé en ce que** le lave-vaisselle (1, 2) comprend en outre un affichage de teneur en humidité (135) destiné à informer l'utilisateur du degré de teneur en humidité du matériau de déshumidification (130, 230).

2. Lave-vaisselle selon la revendication 1, dans lequel la conduite de circulation (100, 300) inclut un réceptacle (122, 322) pour matériau de déshumidification destinée à recevoir le matériau de déshumidification (130, 230) ainsi qu'un couvercle (124, 324) pour matériau de déshumidification destiné à recouvrir le réceptacle pour matériau de déshumidification.

3. Lave-vaisselle selon la revendication 2, dans lequel :
la conduite de circulation (100, 300) inclut un orifice d'entrée (110, 310) au travers duquel est introduit l'air à l'intérieur de la cuve de lavage, un orifice de sortie (140, 340) au travers duquel est évacué l'air se trouvant dans la cuve de lavage, ainsi qu'une partie de trajet d'écoulement (120, 320) reliant l'orifice de sortie et l'orifice d'entrée au travers desquels se déplace l'air, l'un à l'autre, et
le réceptacle (122, 322) pour matériau de déshumidification et le couvercle (124, 324) pour matériau de déshumidification sont agencés dans la partie de trajet d'écoulement.

4. Lave-vaisselle selon la revendication 3, dans lequel la partie de trajet d'écoulement (120) inclut une partie d'interception de l'eau (123) inclinée vers le haut depuis la région de l'orifice d'entrée (110) afin d'empêcher l'eau de la cuve de lavage d'entrer directement à l'intérieur de la conduite de circulation.

5. Lave-vaisselle selon la revendication 1, dans lequel :
la conduite de circulation (100, 300) inclut un ventilateur de circulation (112, 312) destiné à faire circuler l'air, et
le ventilateur de circulation est agencé pour être adjacent à au moins l'un de l'orifice d'entrée (110, 310) et de l'orifice de sortie (140, 340).

6. Lave-vaisselle selon la revendication 1, dans lequel le matériau de déshumidification (130, 230) est constitué d'au moins l'un de la zéolite, d'une fibre poreuse, de carbone actif et de polymère super absorbant.
